# EUROPEAN PATENT APPLICATION

(11) **EP 4 773 281 A1**
(43) Date of publication of application: **08.07.2026**
(21) Application number: 25781429.3
(22) Date of filing: 12.03.2025
(51) Int. Cl.: H01M 10/0525, H01M 4/13

(54) **SECONDARY BATTERY AND ELECTRONIC DEVICE**

(30) Priority: 30.03.2024 CN 202410383396
(71) Applicant: Ningde Amperex Technology Limited, Ningde, Fujian 352100 (CN)
(72) Inventor: LIU, Guangcan, Ningde, Fujian 352100 (CN)
(74) Representative: Kraus & Lederer PartGmbB
(86) International application number: PCT/CN2025/082000
(87) International publication number: WO 2025/209132

(57) **Abstract**

A secondary battery and an electronic device are disclosed. The secondary battery includes an electrode assembly and a negative tab. The electrode assembly includes a negative electrode plate. The negative electrode plate includes a negative current collector and a first negative active layer disposed on at least one surface of the negative current collector. The negative tab is integrally formed with the negative current collector and extends out of the electrode assembly along a first direction. The first negative active layer includes a first region corresponding to the negative tab in the first direction. The first region is provided with a plurality of strip-shaped grooves. In the first direction, the negative current collector includes a first edge located on the same side as the negative tab. Each of the strip-shaped grooves includes a first end located on the same side as the negative tab. A distance between the first end of at least one strip-shaped groove located in the first region and the first edge is greater than or equal to 0.

## Description

### TECHNICAL FIELD

This application relates to the technical field of batteries, and in particular, to a secondary battery and an electronic device.

### BACKGROUND

Secondary batteries (such as a lithium-ion battery) are widely applied in electric vehicles and consumer electronics by virtue of advantages such as a high energy density, a high output power, and a long cycle life. During the use of the lithium-ion battery, it is usually difficult for the electrolyte solution to fully penetrate into a separator, thereby leading to concentration variations of electrolyte particles in an electrode, and resulting in concentration polarization. Consequently, the steps of exchange reaction between the electrode and electrolyte particles are limited. Especially, for batteries requiring a high energy density, the steps of exchange reaction are more limited because a thicker separator is more impermeable to the electrolyte solution. Such limitation is prone to cause lithium plating and affect cycle performance.

### SUMMARY

Through research, the applicant hereof finds that etching grooves on an active layer can boost penetration of an electrolyte solution into the active layer to improve cycle performance. However, the grooves are etched at risk that the etching reaches a tab due to insufficient precision of the processing equipment. On the one hand, the etching to the tab causes damage to the tab and reduces strength of the tab. On the other hand, the etching introduces copper particles, thereby causing micro-short-circuits and exacerbating self-discharge.

An objective of this application is to provide a secondary battery and an electronic device that can reduce the risk of tab damage while improving cycle performance.

A first aspect of this application provides a secondary battery. The secondary battery includes an electrode assembly and a negative tab. The electrode assembly includes a negative electrode plate. The negative electrode plate includes a negative current collector and a first negative active layer disposed on at least one surface of the negative current collector. The negative tab is integrally formed with the negative current collector and extends out of the electrode assembly along a first direction. The first negative active layer includes a first region corresponding to the negative tab in the first direction. The first region is provided with a plurality of strip-shaped grooves. In the first direction, the negative current collector includes a first edge located on the same side as the negative tab. Each of the strip-shaped grooves includes a first end located on the same side as the negative tab. A distance between the first end of at least one strip-shaped groove located in the first region and the first edge is greater than or equal to 0.

In the secondary battery of this application, the strip-shaped grooves are provided in the first region of the first negative active layer, thereby accelerating the transmission of the electrolyte solution, boosting the penetration of the electrolyte solution into the interior of the first region, increasing the storage capacity for the electrolyte solution, and improving the cycle performance. In addition, the distance between the first end of the strip-shaped groove in the first region and the first edge of the negative current collector is set to be greater than or equal to 0. Therefore, the negative tab is not reached by the etching during formation of the strip-shaped groove, thereby reducing the risk that the negative tab is damaged during the processing of the strip-shaped groove. Therefore, the secondary battery of this application reduces the risk of damage to the negative tab while improving the cycle performance.

According to some embodiments of this application, the distance between the first end of the strip-shaped groove located in the first region and the first edge is 0 to 3 mm, thereby alleviating the lithium plating problem, improving the cycle performance, and also reducing the risk of damaging the tab.

According to some embodiments of this application, the first end of each strip-shaped groove and the first edge is 0.2 to 1.5 mm, thereby more effectively improving the cycle performance and reducing the risk of damaging the tab.

According to some embodiments of this application, the first negative active layer further includes a second region staggered from the negative tab in the first direction, and the strip-shaped grooves are also provided in the second region. The strip-shaped grooves are provided in the second region of the first negative active layer, thereby boosting the penetration of the electrolyte solution into the interior of the second region, increasing the storage capacity for the electrolyte solution, and further improving the cycle performance.

According to some embodiments of this application, the negative current collector further includes a third edge and a fourth edge opposite to each other in a second direction perpendicular to the first direction. The plurality of strip-shaped grooves are arranged from the third edge to the fourth edge. The plurality of strip-shaped grooves are distributed on the entire negative current collector in the second direction, thereby more effectively improving the cycle performance.

According to some embodiments of this application, the negative current collector further includes a second edge opposite to the first edge in the first direction. The strip-shaped grooves located in the second region are arranged from the first edge to the second edge. In this way, the strip-shaped grooves run through the first negative active layer along the first direction X, so that the electrolyte solution is quickly transmitted from the first edge to the second edge through the strip-shaped grooves, thereby enhancing the capability of transmitting the electrolyte solution and further improving the cycle performance.

According to some embodiments of this application, the negative electrode plate further includes a second negative active layer. The second negative active layer covers a part of the negative tab and is integrally formed with the first negative active layer. The second negative active layer protects the negative tab, thereby further reducing the risk of the negative tab being damaged by etching.

According to some embodiments of this application, at least one strip-shaped groove located in the first region extends to the second negative active layer. With the second negative active layer covering the negative tab, the negative tab is prevented from being damaged even if the strip-shaped groove located in the first region extends to the position where the negative tab is located, thereby further reducing the risk that the etching reaches the negative tab during processing of the strip-shaped groove.

According to some embodiments of this application, in the first direction, a width of the second negative active layer is 0.5 to 1.0 mm, thereby effectively protecting the negative tab from being etched, and also controlling the increase in the cost of the negative active layer.

According to some embodiments of this application, the strip-shaped groove is perpendicular or inclined to the first edge.

According to some embodiments of this application, first ends of the plurality of strip-shaped grooves located in the first region are substantially aligned with each other in a second direction perpendicular to the first direction.

According to some embodiments of this application, first ends of the plurality of strip-shaped grooves located in the first region are staggered from each other in a second direction perpendicular to the first direction.

According to some embodiments of this application, the electrode assembly further includes a positive electrode plate and a separator. The negative electrode plate, the separator, and the positive electrode plate are stacked in sequence to form a stacked structure.

A second aspect of this application provides an electronic device. The electronic device includes any one of the above-mentioned secondary batteries.

### BRIEF DESCRIPTION OF DRAWINGS

FIG. 1 is a schematic diagram of a secondary battery viewed along a third direction according to an embodiment of this application;
FIG. 2 is a schematic diagram of an electrode assembly viewed along a first direction according to an embodiment of this application;
FIG. 3 is a schematic diagram of a negative electrode plate viewed along a third direction according to an embodiment of this application;
FIG. 4 is a schematic diagram of a negative electrode plate viewed along a third direction according to another embodiment of this application;
FIG. 5 is a schematic diagram of a negative electrode plate viewed along a third direction according to still another embodiment of this application; and
FIG. 6 is a schematic diagram of a negative electrode plate viewed along a third direction according to still another embodiment of this application.

**List of reference numerals:**

| | |
|---|---|
| secondary battery | 100 |
| housing | 10 |
| electrode assembly | 20 |
| electrode terminal | 30 |
| positive tab | 31 |
| negative tab | 32 |
| positive electrode plate | 21 |
| negative electrode plate | 22 |
| separator | 23 |
| positive current collector | 211 |
| positive active layer | 212 |
| negative current collector | 221 |
| first negative active layer | 222 |
| first region | 220 |
| second region | 230 |
| strip-shaped groove | 22a |
| first edge | 221a |
| second edge | 221b |
| third edge | 221c |
| fourth edge | 221d |
| first end | 22a1 |
| second end | 22a2 |
| second negative active layer | 223 |
| first direction | X |
| second direction | Y |
| third direction | Z |

This application is further described below with reference to the following specific embodiments and the foregoing drawings.

### DETAILED DESCRIPTION

The following describes the technical solutions in the embodiments of this application clearly and thoroughly. Evidently, the described embodiments are merely a part of but not all of the embodiments of this application. Unless otherwise defined, all technical and scientific terms used herein bear the same meanings as what is normally understood by a person skilled in the technical field of this application. The terms used in the specification of this application are merely intended to describe specific embodiments but not to limit this application.

The following describes the embodiments of this application in detail. However, this application may be embodied in many different forms, and is in no way construed as being limited to the illustrative embodiments described herein. Rather, the illustrative embodiments are provided in order to impart this application thoroughly in detail to those skilled in the art.

In addition, for brevity and clarity, the size or thickness of various components and layers in the drawings may be scaled up. Throughout the text, the same reference numerical means the same element. As used herein, the term "and/or" includes any and all combinations of one or more related items enumerated by the term. In addition, understandably, when an element A is referred to as "connecting to" an element B, or an element A is referred to as "being connected to" an element B, the element A may be directly connected to the element B, or an intermediate element C may exist through which the element A and the element B can be connected to each other indirectly.

Further, the term "may" used in describing an embodiment of this application indicates "one or more embodiments of this application".

The technical terms used herein is intended to describe specific embodiments but not intended to limit this application. Unless otherwise expressly specified in the context, a noun used herein in the singular form includes the plural form thereof. Further, understandably, the terms "include", "comprise", and "contain" used herein mean existence of the feature, numerical value, step, operation, element and/or component under discussion, but do not preclude the existence or addition of one or more other features, numerical values, steps, operations, elements, components, and/or any combinations thereof.

Understandably, although the terms such as first, second, third may be used herein to describe various elements, components, regions, layers and/or parts, such elements, components, regions, layers and/or parts are not limited by the terms. Such terms are intended to distinguish one element, component, region, layer or part from another element, component, region, layer, or part. Therefore, a first element, a first component, a first region, a first layer, or a first part mentioned below may be referred to as a second element, a second component, a second region, a second layer, or a second part, without departing from the teachings of the illustrative embodiments.

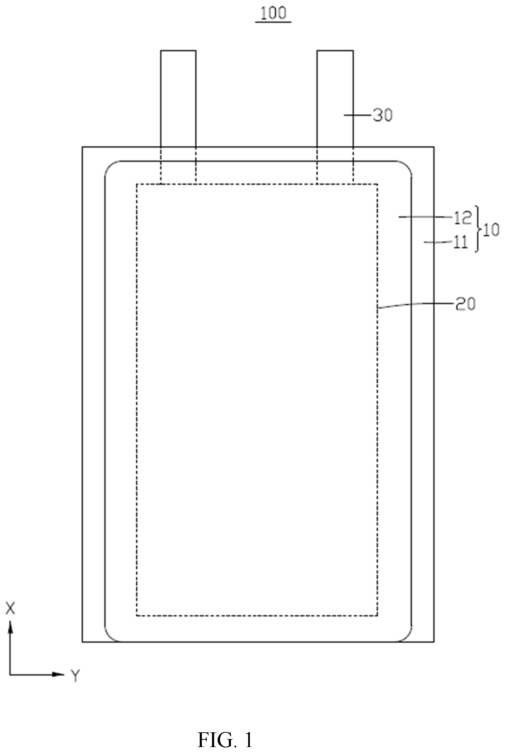

Referring to FIG. 1, an embodiment of this application provides a secondary battery 100, including a housing 10, an electrode assembly 20, an electrolyte solution, and an electrode terminal 30. The electrode assembly 20 and the electrolyte solution are accommodated in the housing 10. The electrode terminal 30 is connected to the electrode assembly 20, and extends out from one side of the housing 10 along a first direction X, so as to connect to an external element. In this application, the first direction X means a length direction of the secondary battery 100. In this embodiment, the number of the electrode terminals 30 is two, which are a positive electrode terminal and a negative electrode terminal, respectively. The two electrode terminals 30 are located on the same side of the secondary battery 100.

Viewed along a third direction Z perpendicular to the first direction X, the secondary battery 100 may assume a regular shape such as a rectangle or a circle, or assume an irregular shape such as a T-shape or an L-shape. In this embodiment, viewed along the third direction Z, the secondary battery 100 is a rectangle. In this application, the third direction X means a thickness direction of the secondary battery 100.

The housing 10 may be a packaging bag sealed with a sealing film (such as an aluminum laminated film or a steel laminated film). In other words, the secondary battery 100 is a pouch cell. Specifically, the housing 10 includes a main body 11 and a sealing portion 12. The main body 11 is provided with an accommodation cavity configured to accommodate the electrode assembly 20. The sealing portion 12 extends from the edge of the main body 11 and is configured to hermetically seal the main body 11. The electrode terminal 30 passes through the sealing portion 12 and extends along the first direction X. In some other embodiments, the housing 10 is a metal housing, such as a steel shell or an aluminum shell.

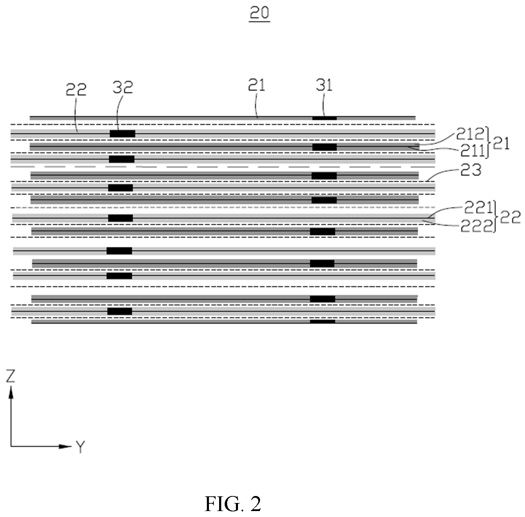

Referring to FIG. 1 and FIG. 2, the electrode assembly 20 includes a positive electrode plate 21, a negative electrode plate 22, and a separator 23 disposed between the positive electrode plate 21 and the negative electrode plate 22. The positive electrode plate 21, the separator 23, and the negative electrode plate 22 are sequentially stacked along a third direction Z to form a stacked structure. In some other embodiments, the positive electrode plate 21, the separator 23, and the negative electrode plate 22 are stacked along the third direction Z and then wound to form a jelly-roll structure.

The positive electrode plate 21 includes a positive current collector 211 and a positive active layer 212 disposed on at least one surface of the positive current collector 211. The positive current collector 211 contains at least one of Ni, Ti, Cu, Ag, Au, Pt, Fe, Al, or a combination thereof. The positive active layer 212 includes a positive active material. The positive active material may include at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadyl phosphate, a lithium-rich manganese-based material, a lithium nickel cobalt aluminum oxide, or a combination thereof. In some embodiments, the positive active layer 212 further includes a binder, and optionally includes a conductive agent. The binder strengthens the bonding between particles of the active material and the bonding between the active material and the current collector. The binder includes, but is not limited to, polyvinyl alcohol, hydroxypropyl cellulose, diacetyl cellulose, polyvinyl chloride, carboxylated polyvinyl chloride, polyvinyl fluoride, or the like. The conductive agent can improve conductivity of the electrode plate. The conductive agent includes, but is not limited to, graphite, carbon black, acetyl black, metal powder, or the like.

The negative electrode plate 22 includes a negative current collector 221 and a first negative active layer 222 disposed on at least one surface of the negative current collector 221. The negative current collector 221 contains at least one of Ni, Ti, Cu, Ag, Au, Pt, Fe, Al, or a combination thereof. The first negative active layer 222 includes a negative active material. The negative active material includes one or more of soft carbon, hard carbon, artificial graphite, natural graphite, silicon, a silicon-oxygen compound, a silicon-carbon composite, lithium titanium oxide, or a lithium-alloyable metal. In some embodiments, the first negative active layer 222 further includes a binder, and optionally includes a conductive agent. The binder strengthens the bonding between particles of the active material and the bonding between the active material and the current collector. The binder includes, but is not limited to, polyvinyl alcohol, hydroxypropyl cellulose, diacetyl cellulose, polyvinyl chloride, carboxylated polyvinyl chloride, polyvinyl fluoride, or the like. The conductive agent can improve conductivity of the electrode plate. The conductive agent includes, but is not limited to, graphite, carbon black, acetyl black, metal powder, or the like.

The secondary battery 100 further includes a positive tab 31 and a negative tab 32. The positive tab 31 is connected to the positive current collector 211, and extends out of the electrode assembly 20 along the first direction X, so as to be welded to the corresponding electrode terminal 30. The negative tab 32 is connected to the negative current collector 221, and extends out of the electrode assembly 20 along the first direction X, so as to be welded to the corresponding electrode terminal 30. In this embodiment, the positive tab 31 is integrally formed with the positive current collector 211, and the negative tab 32 is integrally formed with the negative current collector 221.

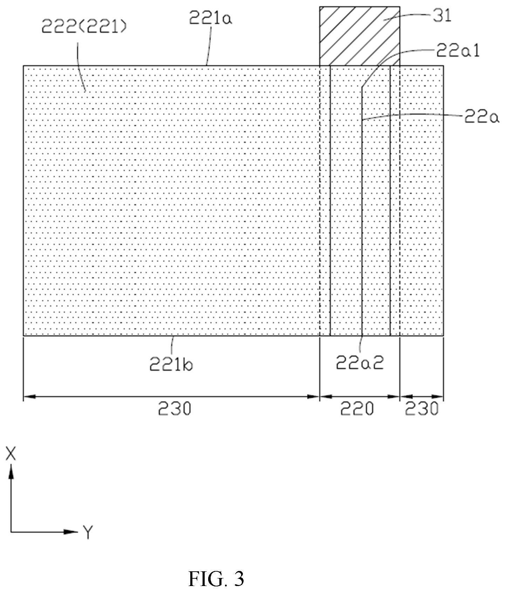

Referring to FIG. 3, the first negative active layer 222 includes a first region 220 corresponding to the negative tab 32 in the first direction X, and a second region 230 staggered from the negative tab 32 in the first direction X. The first region 220 forms a first projection pattern along the third direction Z on the plane where the negative current collector 221 is located. The negative tab 32 forms a second projection pattern along the third direction Z on the plane where the negative current collector 221 is located. Along the first direction X, two lateral edges of the first projection pattern opposite to each other in the second direction Y are aligned with two lateral edges of the second projection pattern opposite to each other in the second direction Y, respectively. The second region 230 forms a third projection pattern along the third direction Z on the plane where the negative current collector 221 is located. In the first direction X, the third projection pattern and the second projection pattern are staggered from each other without overlapping.

The first region 220 is provided with a plurality of strip-shaped grooves 22a. The strip-shaped grooves 22a are formed by removing a part of the first negative active layer 222. A part of the first negative active layer 222 may be removed according to any conventional technique. In this embodiment, the strip-shaped grooves 22a are formed by removing a part of the first negative active layer 222 by a laser etching process. The strip-shaped grooves 22a provided in the first region 220 can accelerate the transmission of the electrolyte solution, boost the penetration of the electrolyte solution into the interior of the first region 220 of the first negative active layer 222, improve the infiltration effect of the electrolyte solution, increase the storage capacity for the electrolyte solution, alleviate the lithium plating problem in the first region 220, and improve the cycle performance. The negative current collector 221 includes a first edge 221a located on the same side as the negative tab 32, and a second edge 221b opposite to the first edge 221a in the first direction X. The strip-shaped groove 22a includes a first end 22a1 located on the same side as the first edge 221a in the first direction X, and a second end 22a2 located on the same side as the second edge 221b. In the first direction X, the distance between the first end 22a1 of at least one strip-shaped groove 22a located in the first region 220 and the first edge 221a is greater than or equal to 0. When the distance between the first end 22a1 and the first edge 221a is less than 0, for example, when the distance is -1 mm, the strip-shaped groove 22a extends to the negative tab 32, and the negative tab 32 is damaged. On the one hand, the strength of the negative tab 32 is reduced, and the welding tension strength of the tab is reduced. On the other hand, during the etching to form the strip-shaped groove 22a extending to the negative tab 32, metal particles are introduced on the negative tab 32, thereby being at risk of causing a micro-short-circuit and aggravating self-discharge. It is hereby noted that when the distance between the first end 22a1 and the first edge 221a is less than 0, it indicates that the strip-shaped groove 22a extends beyond the first edge 221a along the first direction X. When the distance between the first end 22a1 and the first edge 221a is greater than or equal to 0, it indicates that the strip-shaped groove 22a does not extend beyond the first edge 221a along the first direction X.

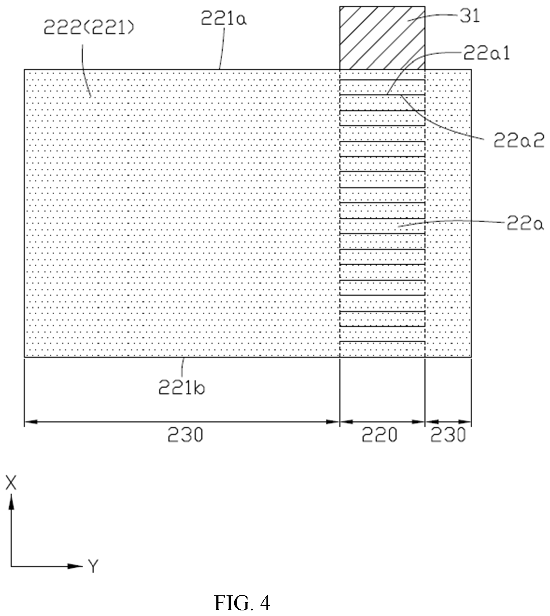

The strip-shaped groove 22a is parallel, perpendicular, or inclined to the first edge 221a. FIG. 3 shows a scenario in which the strip-shaped groove 22a is perpendicular to the first edge 221a. FIG. 4 shows a scenario in which the strip-shaped groove 22a is parallel to the first edge 221a. In some embodiments, a plurality of strip-shaped grooves 22a are parallel to each other, and a plurality of strip-shaped grooves 22a are evenly spaced in the first region 220.

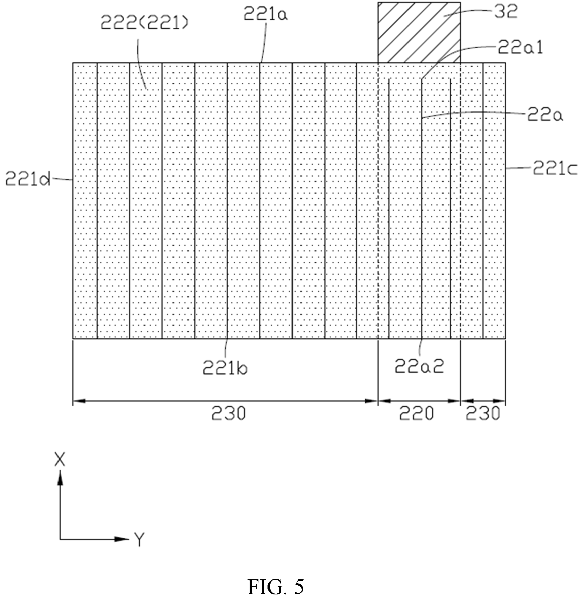

As shown in FIG. 5, in some embodiments, the first ends 22a1 of a plurality of strip-shaped grooves 22a located in the first region 220 are substantially aligned with each other in the second direction Y. In this application, the phrase "substantially aligned" is intended to indicate that the misalignment between different first ends 22a1 is relatively small. For example, the deviation distance between the projections of the first ends 22a1 projected on the negative current collector 221 is not more than 0.5 mm. According to some other embodiments, the first ends 22a1 of the plurality of strip-shaped grooves 22a located in the first region 220 are staggered from each other in the second direction Y.

In some embodiments, the distance between the first end 22a1 of the strip-shaped groove 22a in the first region 220 and the first edge 221a is 0 to 3 mm. When the distance between the first end 22a1 and the first edge 221a is larger, the risk of damage to the negative tab 32 during formation of the strip-shaped groove 22a through etching is lower, but the effect of alleviating lithium plating at the first edge 221a of the first region 220 may be worse. When the distance between the first end 22a1 and the first edge 221a falls within the above range, the lithium plating at the first edge 221a is effectively alleviated, the cycle performance is improved, and the risk of damage to the negative tab 32 during formation of the strip-shaped groove 22a through etching can be reduced.

In some embodiments, the second end 22a2 of the strip-shaped groove 22a overlaps the second edge 221b, thereby alleviating the lithium plating at the second edge 221b of the first region 220.

Referring to FIG. 4, the strip-shaped grooves 22a are also provided in the second region 230. The strip-shaped grooves 22a provided in the second region 230 can boost the penetration of the electrolyte solution into the interior of the second region 230 of the first negative active layer 222, improve the infiltration effect of the electrolyte solution, increase the storage capacity for the electrolyte solution, alleviate the lithium plating problem in the second region 230, and improve the cycle performance. In some embodiments, the strip-shaped grooves 22a located in the second region 230 are arranged from the first edge 221a to the second edge 221b. In other words, the strip-shaped grooves 22a located in the second region 230 run through the first negative active material 222 along the first direction X, so that the electrolyte solution is quickly transmitted from the first edge 221a to the second edge 221b through the strip-shaped grooves, thereby enhancing the capability of transmitting the electrolyte solution, further alleviating the lithium plating problem in the second region 230, and improving the cycle performance.

The negative current collector 221 further includes a third edge 221c and a fourth edge 221d opposite to each other in the second direction Y. In some embodiments, the plurality of strip-shaped grooves 22a are arranged from the third edge 221c to the fourth edge 221d. In other words, the plurality of strip-shaped grooves 22a are distributed on the entire negative current collector 221 along the second direction Y. In some embodiments, the plurality of strip-shaped grooves 22a are evenly spaced on the negative current collector 221.

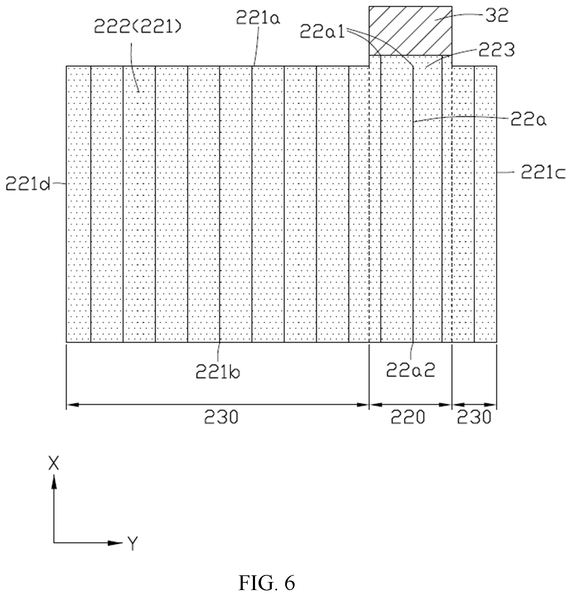

Referring to FIG. 6, in some embodiments, the negative electrode plate 22 further includes a second negative active layer 223. The second negative active layer 223 is integrally formed with the first negative active layer 222. Viewed along the third direction Z, the second negative active layer 223 covers a part of the negative tab 32, and is located outside the negative current collector 221. At least one strip-shaped groove 22a located in the first region 220 extends to the second negative active layer 223 from the first negative active layer 222. With the second negative active layer 223 covering the negative tab 32, the negative tab 32 is prevented from being damaged even if the strip-shaped groove 22a located in the first region 220 extends to the position where the negative tab 32 is located, thereby further reducing the risk that the etching reaches the negative tab 32 during processing of the strip-shaped groove 22a.

In some embodiments, in the first direction X, the width of the second negative active layer 223 is 0.5 to 1.0 mm. For example, the width of the second negative active layer 223 is 0.5 mm, 0.6 mm, 0.7 mm, 0.8 mm, 0.9 mm, 1.0 mm, or a value falling within a range formed by any two thereof.

An embodiment of this application further provides an electronic device. The electronic device includes any one of the above-mentioned secondary batteries 100. The electronic device of this application may be, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, lighting appliance, toy, game console, watch, electric tool, flashlight, camera, large household battery, lithium-ion capacitor, and the like.

The following describes the performance of the secondary battery according to this application with reference to specific embodiments and comparative embodiments.

### Embodiment 1

Preparing a positive electrode plate: Dissolving a positive active material (lithium cobalt oxide), a conductive agent (conductive carbon black), and a binder (polyvinylidene fluoride) at a mass ratio of 97.5 : 1 : 1.5 in an N-methylpyrrolidone solution to form a positive electrode slurry in which the solid content is 75%. Using aluminum foil as a current collector, applying the positive electrode slurry onto a surface of the positive current collector to obtain a positive active layer. Subsequently, performing cold-pressing and cutting to obtain a negative electrode plate.

Preparing a negative electrode plate: Mixing a negative active material (graphite), a conductive agent (conductive carbon black), a thickener (sodium carboxymethyl cellulose), and a binder (styrene-butadiene rubber) at a mass ratio of 97.5 : 1 : 0.5 : 1, adding deionized water as a solvent, and stirring well to obtain a negative electrode slurry in which the solid content is 50 wt%. Using copper foil as a current collector, applying the negative electrode slurry onto a surface of the negative current collector to obtain a first negative active layer. Etching a plurality of strip-shaped grooves on the first negative active layer by laser etching. Distributing the plurality of strip-shaped grooves throughout the first negative active layer, and leaving the strip-shaped grooves to be parallel to the first edge of the negative current collector. Subsequently, performing cold-pressing and cutting to obtain a negative electrode plate. The structure of the negative electrode plate is shown in FIG. 4.

Preparing a separator: Using a polyethylene film as a separator.

Preparing an electrolyte solution: Mixing ethylene carbonate (EC), diethyl carbonate (DEC), propylene carbonate (PC), propyl propionate (PP, and vinylene carbonate (VC) at a mass ratio of 20: 30: 20: 28: 2 to obtain an organic solvent, and then mixing a fully dried lithium salt LiPF₆ with the organic solvent at a mass ratio of 8: 92 to obtain an electrolyte solution.

Preparing a lithium-ion battery: Stacking the positive electrode plate, the separator, and the negative electrode plate sequentially such that the separator is located between the positive electrode plate and the negative electrode plate to form an electrode assembly. Putting the electrode assembly into an aluminum laminated film packaging bag, and hot-pressing the packaging bag at a preset pressure to bond the packaging bag. Performing electrolyte injection and chemical formation to obtain an lithium-ion battery.

### Embodiments 2 to 10 and Comparative Embodiment 2

Different from Embodiment 1 in the distance between the first end of the strip-shaped groove located in the first region and the first edge. Specific parameters are set out in Table 1.

### Comparative Embodiment 1

Different from Embodiment 1 in that no strip-shaped groove is etched on the first negative active layer.

The following describes the test method of each parameter in this application.

### Testing the cycle capacity retention rate

Charging a secondary battery at 25 °C according to the following charging steps:
S1. Charging the secondary battery at a constant current of 1.65C until the voltage of the secondary battery reaches 4.5 V.
S2. Charging the secondary battery at a constant voltage of 4.5 V until the charge rate reaches 0.025 C.
S3. Leaving the secondary battery to stand for 5 minutes.
S4. Discharging the secondary battery at a constant current of 0.5C until the voltage of the secondary battery reaches 3.2 V.
S5. Leaving the secondary battery to stand for 5 minutes.

The charge-and-discharge process is one cycle. After completion of the first charge-and-discharge cycle, discharging the battery at a constant current of 0.2C until the voltage reaches 3.0 V, and recording the discharge capacity as an initial capacity of the battery. Repeating the charge-and-discharge process for 1000 cycles, and then discharging the battery at a constant current of 0.2C until the voltage reaches 3.0 V. Recording the discharge capacity as a recovered capacity of the battery. Capacity retention rate = recovered capacity/initial capacity × 100%.

### Testing the lithium plating status

Repeating the above charge-and-discharge process for 1000 cycles, and then disassembling the battery in a fully charged state to obtain a negative electrode plate. Determining the ratio of the area of lithium plating regions of the negative electrode plate to the area of the entire negative electrode plate.

### Testing the connection strength of the negative tab

In this application, the connection strength between the negative tab and the negative current collector is characterized by the connection strength between the negative tab and the electrode terminal.

The test process is as follows: Discharging the secondary battery until the voltage reaches 3.0 V, and then removing the packaging bag. Placing the electrode assembly horizontally, and fixing the electrode assembly with a jig. Folding up the electrode terminal connected to the negative tab, and then clamping the electrode terminal with a tensile machine, and pulling the electrode terminal upward in the vertical direction until the tab snaps off. Recording the tensile force curve, and taking the maximum tensile force as the tab connection strength.

Table 1 shows parameters and evaluation results of embodiments and comparative embodiments.

**Table 1**

| | Distance between first end and first edge (mm) | Proportion of lithium plating area | Cycle capacity retention rate | Tab connection strength (N) |
|---|---|---|---|---|
| Comparative Embodiment 1 | / | 65% | 54% | 174 |
| Comparative Embodiment 2 | -1 | 0% | 87% | 84 |
| Embodiment 1 | 0 | 0% | 93% | 152 |
| Embodiment 2 | 0.1 | 1 | 91% | 164 |
| Embodiment 3 | 0.2 | 0 | 90% | 172 |
| Embodiment 4 | 0.3 | 0 | 91% | 173 |
| Embodiment 5 | 1 | 0 | 90% | 171 |
| Embodiment 6 | 1.5 | 0 | 90% | 176 |
| Embodiment 7 | 2 | 0 | 88% | 172 |
| Embodiment 8 | 3 | 1 | 86% | 174 |
| Embodiment 9 | 4 | 7 | 80% | 175 |
| Embodiment 10 | 5 | 10 | 76% | 174 |

As can be seen from Embodiments 1 to 10 versus Comparative Embodiments 1 to 2, when a plurality of strip-shaped grooves are provided on the first negative active layer, and the distance between the first end of the strip-shaped groove located in the first region and the first edge is greater than or equal to 0, both cycle capacity retention rate and tab connection strength are relatively high. In Comparative Embodiment 1, no strip-shaped groove is etched. Although the tab connection strength is high, the cycle capacity retention rate is the worst. In Comparative Embodiment 2, the distance between the first end of the strip-shaped groove located in the first region and the first edge is less than 0, the strip-shaped groove extends to the negative tab, and the negative tab is etched, thereby resulting in the worst tab connection strength.

As can be seen from comparison of Embodiments 1 to 10, when the distance between the first end of the strip-shaped groove in the first region and the first edge of the negative current collector is 0 to 3 mm, the proportion of the lithium plating area is less than 1%, the ability to alleviate lithium plating is good, and the tab connection strength is relatively high. In Embodiments 9 to 10, the distance between the first end of the strip-shaped groove in the first region and the first edge of the negative current collector is greater than 3 mm. Although the tab is not thermally damaged by the laser etching during formation of the strip-shaped groove so that the tab connection strength is roughly the same as the tab strength of the battery without the strip-shaped groove, the strip-shaped groove produces a limited effect on increasing the electrolyte transmission capacity. Consequently, the lithium plating area is increased, the effect of alleviating lithium plating is reduced, and the cycle capacity retention rate is relatively low. In Embodiments 4 to 6, the distance between the first end of the strip-shaped groove in the first region and the first edge of the negative current collector is 0.2 to 1.5 mm, and therefore, no lithium plating occurs, and the tab connection strength is relatively high.

Disclosed above are merely preferred embodiments of this application that are in no way construed as any limitation on the scope of rights of this application. Therefore, any equivalent variations made based on the claims of this application still fall within the scope covered by this application.

## Claims

1. A secondary battery , comprising an electrode assembly and a negative tab , wherein the electrode assembly comprises a negative electrode plate , the negative electrode plate comprises a negative current collector and a first negative active layer disposed on at least one surface of the negative current collector the negative tab is integrally formed with the negative current collector and extends out of the electrode assembly along a first direction, **characterized in that** the first negative active layer comprises a first region corresponding to the negative tab in the first direction and the first region is provided with a plurality of strip-shaped grooves ; and in the first direction , the negative current collector comprises a first edge located on a same side as the negative tab , each of the strip-shaped grooves comprises a first end located on a same side as the negative tab and a distance between the first end of at least one strip-shaped groove located in the first region and the first edge is greater than or equal to 0.

2. The secondary battery according to claim 1, **characterized in that** the distance between the first end of the strip-shaped groove located in the first region and the first edge is 0 to 3 mm.

3. The secondary battery according to claim 2, **characterized in that** the distance between the first end of the strip-shaped groove located in the first region and the first edge is 0.2 to 1.5 mm.

4. The secondary battery according to any one of claims 1 to 3, **characterized in that** the first negative active layer further comprises a second region staggered from the negative tab in the first direction , and the strip-shaped grooves are also provided in the second region .

5. The secondary battery according to claim 4, **characterized in that** the negative current collector further comprises a third edge and a fourth edge opposite to each other in a second direction perpendicular to the first direction , and the plurality of strip-shaped grooves are arranged from the third edge to the fourth edge .

6. The secondary battery according to claim 4, **characterized in that** the negative current collector further comprises a second edge opposite to the first edge in the first direction , and the strip-shaped grooves located in the second region are arranged from the first edge to the second edge .

7. The secondary battery according to any one of claims 1 to 6, **characterized in that** the negative electrode plate further comprises a second negative active layer , and the second negative active layer covers a part of the negative tab and is integrally formed with the first negative active layer .

8. The secondary battery according to claim 7, **characterized in that** at least one strip-shaped groove located in the first region extends to the second negative active layer .

9. The secondary battery according to claim 7, **characterized in that** in the first direction , a width of the second negative active layer is 0.5 to 1.0 mm.

10. The secondary battery according to any one of claims 1 to 9, **characterized in that** the strip-shaped groove is perpendicular or inclined to the first edge .

11. The secondary battery according to claim 10, **characterized in that** first ends of the plurality of strip-shaped grooves located in the first region are substantially aligned with each other in a second direction perpendicular to the first direction .

12. The secondary battery according to claim 10, **characterized in that** first ends of the plurality of strip-shaped grooves located in the first region are staggered from each other in a second direction perpendicular to the first direction .

13. The secondary battery according to any one of claims 1 to 12, **characterized in that** the electrode assembly further comprises a positive electrode plate and a separator , and the negative electrode plate , the separator , and the positive electrode plate are stacked in sequence to form a stacked structure.

14. The secondary battery according to any one of claims 1 to 13, **characterized in that** the negative current collector further comprises a second edge disposed opposite to the first edge in the first direction ; the strip-shaped groove further comprises a second end located on a same side as the second edge in the first direction ; and the second end overlaps the second edge .

15. An electronic device, comprising the secondary battery according to any one of claims 1 to 14.
